# EUROPÄISCHE PATENTSCHRIFT

(11) **EP 0 650 582 B1**
(45) Veröffentlichungstag und Bekanntmachung des Hinweises auf die Patenterteilung: **02.07.1997**
(21) Anmeldenummer: 94908930.4
(22) Anmeldetag: 18.03.1994
(51) Int. Cl.: G01G 21/24, G01G 19/02

(54) **KRAFTMESSER MIT ELASTISCHER UNTERSETZUNG**
DYNAMOMETER WITH ELASTIC DEMULTIPLICATION
DYNAMOMETRE A DEMULTIPLICATION ELASTIQUE

(30) Priorität: 13.05.1993 CH 1454/93
(43) Veröffentlichungstag der Anmeldung: 03.05.1995
(73) Patentinhaber: WIRTH GALLO MESSTECHNIK AG, CH-8032 Zürich (CH)
(72) Erfinder: WIRTH, Johannes, CH-8032 Zürich (CH)
(74) Vertreter: Salgo, Reinhold Caspar, Dr.
(86) Internationale Anmeldenummer: CH9400059
(87) Internationale Veröffentlichungsnummer: WO9427123

(56) Entgegenhaltungen:
- EP-A- 0 016 238
- EP-A- 0 195 875
- WO-A-92/06357

## Beschreibung

Die vorliegende Erfindung bezieht sich auf einen Kraftmesser an einem Gestell und einer Lastbrücke mit elastischer Untersetzung der zu messenden Kraft.

Solche Kraftmesser sind mehrere bekannt, so z.B. aus der Europ. Patentanmeldung 91 916 035.8 (WO-A1-92-6357).

Dieser genannte Kraftmesser ist aufgebaut aus zwei Befestigungsplatten, die verbunden sind durch die beiden Lastfedern, die den Hauptteil der zu messenden Kraft tragen und sie direkt an das Gestell - oder die Tragstruktur - abführen. Von den beiden Befestigungsplatten kragen die zwei Messfedern aus, zwischen denen der Kraftsensor eingebaut ist.

Dieser Aufbau hat sich an sich bewährt und erfüllt für bestimmte Genauigkeitsanforderungen durchaus seinen Zweck.

Werden die Genauigkeitsanforderungen gesteigert, so zeigt es sich, dass Biegemomente, sowohl auf der Brückenseite, als auch auf der Gestellseite in den Kraftmesser hineinwirken können und damit die Messresultate verfälschen. Solche Biegemomente können erzeugt werden durch bestimmte Lastanordnungen auf der Brücke, können jedoch auch schon durch das Anschrauben der genannten Befestigungsplatten an Brücke und Gestell bewirkt werden; sie können ein- oder mehrachsig sein.

Eine entsprechende Entkopplung ist in der EP-A1-195875 mit Drehgelenken und Haltelenkern dargestellt.

Die Aufgabe der vorliegenden Erfindung ist es, den Kraftmesser in ernfeder Weise so zu gestalten, dass Biegemomente, die auf die und von der Befestigung ausgeübt werden, nicht in den Kraftmesser hineinwirken, dieser somit vom Einfluss solcher Biegemomente geschützt ist.

Die Lösung der gestellten Aufgabe ist wiedergegeben im Patentanspruch 1.

Die beigefügte Zeichnung illustriert in mehreren Figuren verschiedene Ausführungsbeispiele des Erfindungsgedankens. Es zeigen
- Fig. 1: ein erstes Ausführungsbeispiel,
- Fig. 2: eine Variante zum ersten Ausführungsbeispiel,
- Fig. 3: ein zweites Ausführungsbeispiel mit Bewegungsbeschränkungen,
- Fig. 4: eine Variante zum zweiten Ausführungsbeispiel.
- Fig. 5: Eine Variante zu den Ausführungsbeispielen gem. Fig.2,3.

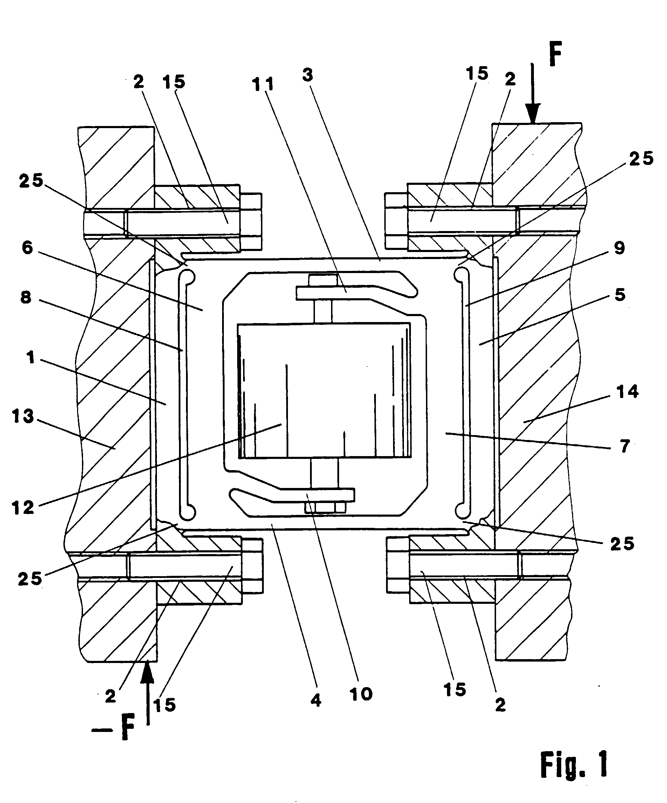

In Fig.1 ist ein erstes Ausführungsbeispiel einer erfindungsgemässen Vorrichtung dargestellt. Mit der Ziffer 1 ist ein plattenförmiges Bauteil bezeichnet, das hier Gestellträger genannt wird. An seinen beiden Enden trägt der Gestellträger 1 beispielsweise je eine Bohrung 2 zur Befestigung der ganzen Vorrichtung an einem schematisch und teilweise gezeichneten Gestell 13. Mit dem Gestellträger 1 sind je eine obere und eine untere Blattfeder 3, 4 verbunden, die an ihren anderen Enden mit einem, dem Gestellträger 1 entsprechenden Bauteil verbunden sind, der hier Lastträger 5 genannt wird. Auch der Lastträger 5, der in diesem Ausführungsbeispiel analog zum Gestellträger 1 ausgebildet ist, trägt zwei Bohrungen 2 zur Befestigung des Lastträgers 5 an einer - ebenfalls nur schematisch und teilweise gezeichneten - Lastbrücke 14.

Die biegsamen Teile der beiden Blattfedern 3, 4 befinden sich zwischen zwei - in Fig.1 vertikalen - Stäben 6, 7; Stab 6 auf der Seite des Gestellträgers 1, Stab 7 auf der Seite des Lastträgers 5, von denen sie je durch einen schmalen Schlitz 8, 9 getrennt sind. Im wesentlichen läuft aber der Stab 6 parallel zum Lastträger 5.

Vom Stab 6 erstreckt sich eine weitere auskragende Blattfeder, als Messfeder 10 bezeichnet, in den Raum zwischen den Blattfedern 3, 4 und den Stäben 6, 7. Eine im wesentlichen gleiche Messfeder 11 kragt vom Stab 7 in den gleichen genannten Raum. Die Messfedern 10, 11 sind so gestaltet, dass ihre Enden, in der Vertikalrichtung einander überlappen. Zwischen diese genannten Enden der Messfedern 10, 11 ist ein Kraftsensor 12 eingebaut, der im vorliegenden Ausführungsbeispiel auf Druck beansprucht wird.

Das aus den Stäben 6, 7, den Blattfedern 3, 4, den Messfedern 10, 11 und dem Kraftsensor 12 bestehende Mess-System ist mit dem Gestellträger 1 einerseits und dem Lastträger 5 anderseits also nur durch je zwei verhältnismässig schlanke und kurze Federstäbe 25 verbunden, die im wesentlichen als Biegegelenke wirken.

Wird nun beim Einbau des erfindungsgemässen Kraftmessers die Verbindung zwischen Kraftmesser und Gestell 13 einerseits und Kraftmesser und Brükke 14 andererseits beispielsweise mittels Schrauben 15 erzeugt, so ist nicht auszuschliessen, dass sich der Gestellträger 1 oder/und der Lastträger 5 je in einer oder mehreren Achsen verbiegen. Die vier Schrauben 15 sind vorzugsweise in der Flucht der Blattfedern 3, 4 und damit der Federstäbe 15 angeordnet. Es ist durch die erfindungsgemässe Formgebung des Kraftmessers nun dafür gesorgt, dass solche - wenn auch minimale - Verbiegungen durch die Federstäbe 25 aufgenommen werden, sie also vom Mess-System ferngehalten werden. Ebenso werden, wegen der Drehelastizität der Federstäbe 25, keine von der Einspannung herrührenden Drehungen auf das Mess-System übertragen. Dazu tragen wesentlich die genannten Schlitze 8, 9 bei, die das Mess-System bis auf die vier Federstäbe 25 vom Gestellträger 1 und vom Lastträger 5 trennen.

Die von der Lastbrücke 14 ausgeübte Kraft ist in Fig.1 mit einem Pfeil und dem Symbol F gekennzeichnet; mit -F und einem Pfeil ist die vom Gestell 13 aufgebrachte Gegenkraft bezeichnet.

Die Begriffe Gestell 13, Lastbrücke 14 sind nur der Klarheit halber gewählt; da die Vorrichtung ja im wesentlichen symmetrisch ist, sind die beiden Kräfte selbstredend austauschbar in dem Sinne, dass die rechts bezeichnete Kraft von oben nach unten, die links bezeichnete von unten nach oben wirkt, bezogen auf die Darstellung von Fig.1.

Die Formgebung der Schlitze 8, 9, ist einerseits durch die technische Lösung an sich bedingt, welche die Trennung des Mess-Systems vom Tragsystem (bestehend aus Gestell 13, Gestellträger 1 und zwei Schrauben 15 einerseits und Lastbrücke, Lastträger 5 und zwei weiteren Schrauben 15 andererseits) verlangt. Andererseits ergibt sie sich aus der optimalen Lösung der Herstellung eines solchen erfindungsgemässen Lastträgers: Es gehört zur Erfindungsidee, dass der in Fig.1 gezeichnete und dazu beschriebene Kraftmesser aus einem Stück gefertigt ist. Und zur Fertigung aus einem Stück hat sich die Drahterosion als am zweckmässigsten erwiesen. Die Schlitze 8, 9 können so ausserordentlich schmal hergestellt werden, was wesentlich ist, damit nicht neue Biegemoment-Probleme eingeführt werden, die aus dem Abstand von Gestellträger 1 und Stab 6, bzw. Lastträger 5 und Stab 7 entstehen können.

Die Bezeichnungen von Gestellträger 1 und Lastträger 5 sind hier nur hinsichtlich der Beschreibung sinnvoll; an sich kann die erfindungsgemässe Vorrichtung um die senkrecht auf der Zeichenebene stehende Achse um 180 gedreht werden, worauf sie mit sich selbst deckungsgleich ist. Technisch gesprochen, kann auch die mit -F bezeichnete Kraft die zu messende sein. Damit wären die Begriffe Gestell 13 und Lastbrücke 14 und die mit ihnen assoziierten zu vertauschen.

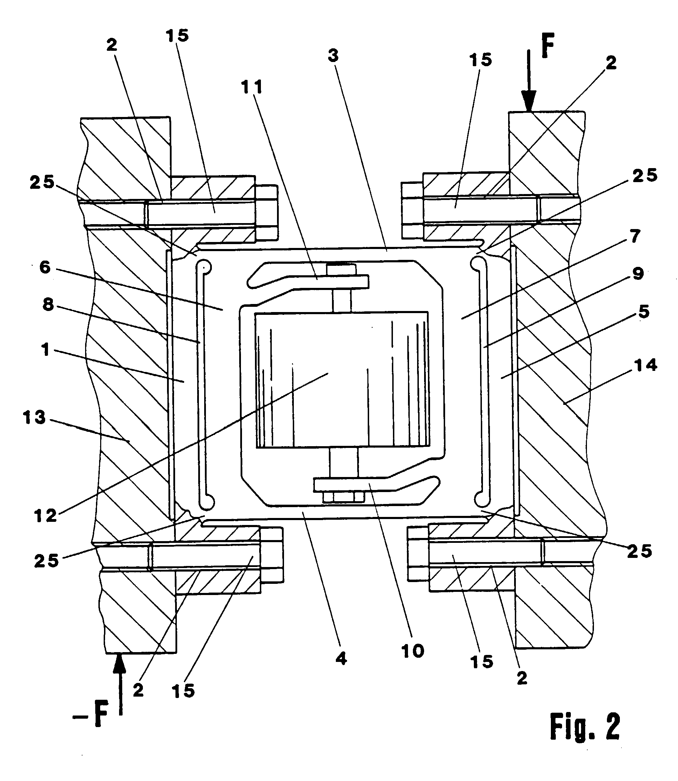

Fig.2 zeigt eine Variante zum Ausführungsbeispiel gemäss Fig.1. Die Messfeder 10 ist hier mit dem Stab 7, die Messfeder 11 mit dem Stab 6 verbunden. Wird nun auf die mit dem Lastträger 5 verbundene Lastbrücke 14 die Kraft F ausgeübt, so wird die auf den Kraftsensor 12 wirkende Kraft verkleinert, was voraussetzt, dass der Kraftsensor 12 unter einer Vorspannkraft eingesetzt ist, welche den zulässigen und möglichen Messbereich übersteigt. Der Vorteil dieser Anordnung liegt auch darin, dass der Kraftsensor 12 nicht überlastet werden kann; übersteigt die Kraft F das zulässige Mass, so wird der Kraftsensor 12 lediglich völlig entlastet, bleibt somit auf jeden Fall unbeschädigt.

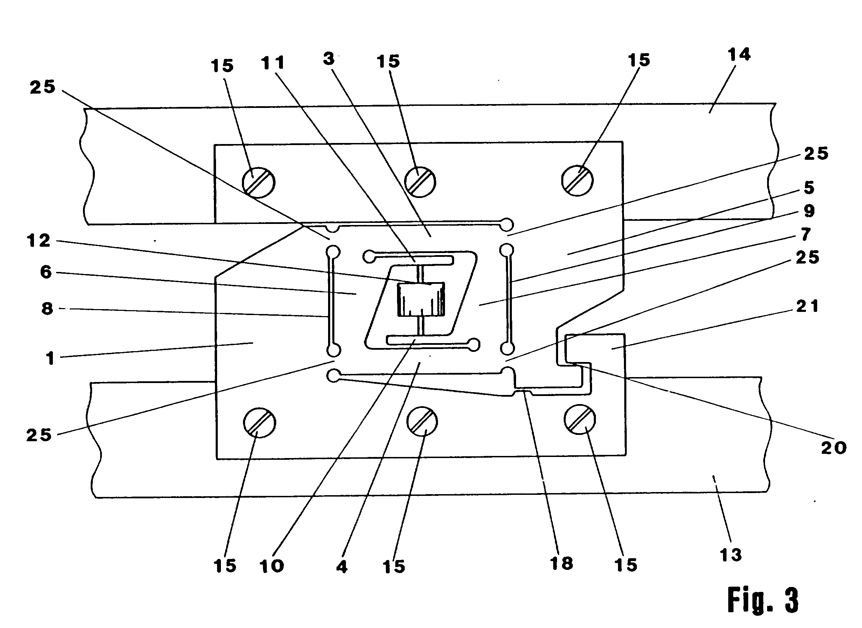

In Fig.3 ist ein zweites Ausführungsbeispiel der Erfindung dargestellt. Dieses Ausführungsbeispiel eignet sich besonders für grosse Waagbrücken oder für Waagen an Fahrzeugbrücken. Das Gestell 13 hat dann beispielsweise die Form eines auf dem Boden oder dem Fahrzeug-Chassis abgestützten Rahmens, ebenso ist die mit 14 bezeichnete Lastbrücke rahmenförmig. Beispielsweise vier solcher erfindungsgemässer Kraftmesser tragen die Lastbrücke 14. Der Aufbau eines einzelnen Kraftmessers gemäss Fig.3 entspricht im wesentlichen jenem von Fig.2. Der Gestellträger 1 ist mit Schrauben 15 mit dem Gestell 13 verschraubt; der Stab 6 - durch den Schlitz 8 vom Gestellträger 1 getrennt - ist hier keilförmig gestaltet; ebenso der ihm entsprechende Stab 7, welcher durch den Schlitz 9 vom Lastträger 5 getrennt ist.

Der Gestellträger 1 ist so breit ausgeführt, dass er die ganze bis hier beschriebene Vorrichtung unterfährt und sich noch weiter nach rechts fortsetzt. Der Lastträger 5 ist nach unten soweit fortgesetzt, dass zwischen ihm und dem Gestellträger 1 nur ein schmaler Spalt 18 bleibt. Dieser Spalt 18 definiert die maximale Durchbiegung des Kraftmessers gemäss Fig. 3 und schützt den Kraftsensor 12 vor Ueberlast, besonders im Einsatz des erfindungsgemässen Kraftmessers als Fahrzeugwaage.

Die weitere Ausbildung des Kraftmessers nach Fig.3 hat ebenfalls Sicherungszwecke: Die Bewegung der unteren Fortsetzung des Lastträgers 5 nach oben ist ebenfalls eingeschränkt, indem eine seitliche Auskragung 19 des Lastträgers 5 nur durch einen schmalen horizontalen Spalt 20 von einer mit 21 bezeichneten, die Auskragung 19 umfassenden, Fortsetzung des Gestellträgers 1 getrennt ist. Die Spalte 18 und 20 definieren damit die maximale Bewegungsweite des Lastträgers 5 in Bezug auf den Gestellträger 1 in vertikaler Richtung.

Die parallel zu den Blattfedern 3, 4 verlaufenden Messfedern 10, 11 sind hier so ausgeführt, dass eine den Kraftsensor 12 entlastende Schaltung entsteht gemäss Fig.2. Die untere Messfeder 10 ist also mit dem lastträgerseitigen Stab 7, die obere Messfeder 11 mit dem gestellträgerseitigen Stab 6 verbunden.

Die Begriffe links und rechts, die hier in der Beschreibung verwendet werden, sind nicht an sich kennzeichnend, nur in ihrer relativen Bedeutung; die spiegelbildliche Ausführung von Fig.3 ist in der Beschreibung mitenthalten.

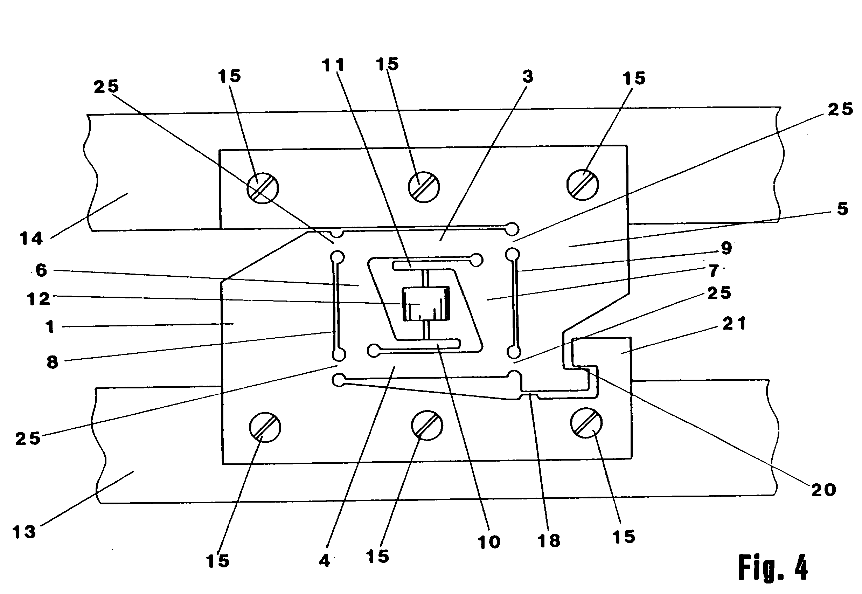

Das Ausführungsbeispiel von Fig.4 unterscheidet sich von jenem nach Fig. 3 dadurch, dass die Messfeder 10 mit dem gestellträgerseitigen Stab 6, die Messfeder 11 mit dem lastträgerseitigen Stab 7 verbunden ist. Dadurch wird der Kraftsensor 12 durch Belasten der Lastbrücke 14 ebenfalls belastet. Die übrigen Ausführungsmerkmale sind gegenüber dem Beispiel von Fig.3 unverändert.

Hinsichtlich der spiegelbildlichen Ausführung gilt das zu Fig.3 Gesagte. Ebenso sind die Begriffe "oben" und "unten" nur relativ zueinander zu verstehen. Was "Lastbrücke" genannt ist, kann auch "Gestell" sein und umgekehrt.

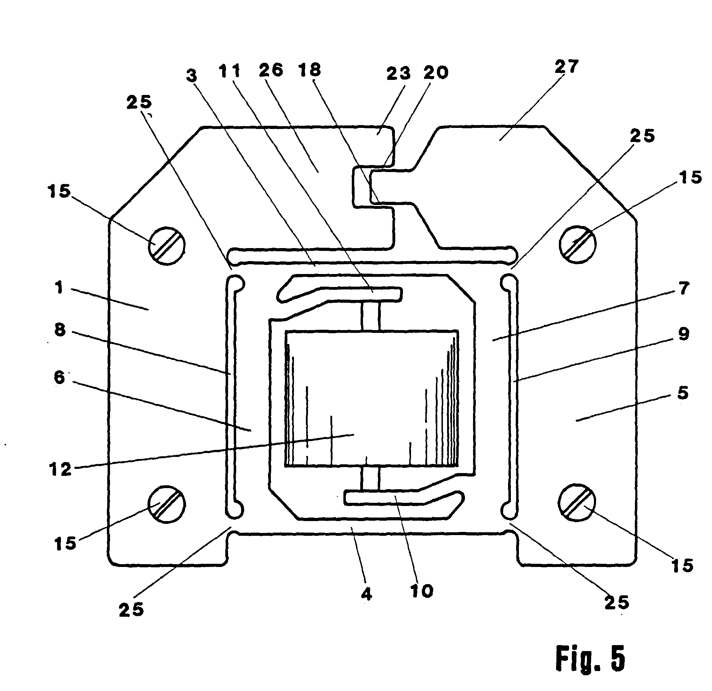

Das Ausführungsbeispiel von Fig. 5 ist eine Variante zu denjenigen der Fig. 2 und 3. Es trägt hinsichtlich des Mess-Systems die Formmerkmale des Ausführungsbeispiels gemäss Fig. 2. Die Funktion der Bewegungsbegrenzung ist jenem von Fig. 3 entnommen, formlich jedoch anders ausgeführt: Sowohl der Gestellträger 1 als auch der Lastträger 5 tragen je eine Fortsetzung 26 bzw. 27, die aufeinander zulaufen. Die Fortsetzung 26 des Gestellträgers 1 ist an ihrem, der Fortsetzung 27 des Lastträgers 5 zugewandten, Ende gabelförmig ausgestaltet zu einer Ausnehmung 23. Die Fortsetzung 27 ragt in diese Ausnehmung 23 hinein und hält sowohl nach oben, als auch nach unten einen kleinen Abstand in Form der Spalte 18, 20. Die Breite der Spalte 18, 20 definiert auch hier die gesamte Bewegungsweite des erfindungsgemässen Kraftmessers.

Es ist selbstverständlich im Erfindungsgedanken mitenthalten, die Ausgestaltung der Fortsetzungen 26, 27 zu vertauschen; es ist ebenso erfindungsgemäss, die Fortsetzungen 26, 27 unten an die mit 1, 5 bezeichneten Elemente anzuschliessen.

Nicht gezeichnet ist ferner die den Fig. 1 und 4 entsprechende Variante, wo die Messfedern 10, 11 so an die Stäbe 6, 7 angeschlossen sind, dass der Kraftsensor 12 mit zunehmender Belastung des Lastträgers 5 auf Druck belastet wird Erfindungswesentlich ist die Tatsache, dass alle Ausführungsbeispiele im wesentlichen aus ebenen Platten bestehen, deren Gestaltungsmerkmale nur im zwei Dimensionen liegen und dass diese Gestaltungsmerkmale durch Drahterodieren oder ähnlichen Schneideverfahren (wie Wasserstrahl-, Laser- oder Plasmaschneiden) aus ebenen Platten erzeugt werden. Damit besteht jeder erfindungsgemässe Kraftmesser - abgesehen vom eingesetzten Kraftsensor 12 - aus einem Stück ohne innere Schweiss- oder Schraubverbindungen.

Der Kraftsensor 12 setzt die auf ihn wirkende Kraft in ein elektrisches analoges oder digitales Signal um. Zu jedem Ausführungsbeispiel gehört daher eine Auswerte- und Anzeigeelektronik nach dem Stande der Technik. Als Kraftsensoren 12 kommen in Frage beispielsweise solche mit Dehnmessstreifen, mit Schwingquarzen oder mit schwingenden Saiten oder Stimmgabeln.

## Patentansprüche

1. Elastisch untersetzender Kraftmesser an einem Gestell (13) und einer Lastbrückel (14), mit zwei Blattfedern (3, 4) und zwei, im Vergleich mit diesen weicheren, Messfedern (10,11) und einem zwischen den Messfedern (10, 11) eingebauten Kraftsensor (12), welcher Kraftmesser aus einem Stück gefertigt ist,
- mit einem an dem Gestell (13) befestigten Gestellträger (1), einem an der Lastbrücke (14) befestigten Lastträger (5), einem im wesentlichen parallel zum Gestellträger (1) verlaufenden gestellträgerseitigen Stab (6), einem im wesentlichen parallel zum Lastträger (5) verlaufenden lastträgerseitigen Stab (7), welche Stäbe (6, 7) im wesentlichen vertikal sind, den zwei im wesentlichen horizontalen und untereinander parallelen Blattfedern (3, 4) und den zwei zu diesen und untereinander im wesentlichen parallelen Messfedern (10, 11) und einem zwischen den Messfedern (10, 11) eingebauten Kraftsensor (12), wobei
- die eine Blattfeder (3) oben, die andere Blattfeder (4) unten verläuft,
- alle diese genannten Teile des Kraftmessers (1, 3, 4, 5, 6, 7, 10, 11) mit Ausnahme des Kraftsensors (12) aus einem einzigen Stück mittels Drahterosion gefertigt sind, und dieses genannte einzige Stück eine ebene Platte ist,
- die Trennung von Gestellträger (1) und gestellträgerseitigem Stab (6) durch einen zum genannten Stab (6) im wesentlichen parallel laufenden schmalen Schlitz (8) erzeugt ist und die Trennung von Lastträger und lastträgerseitigem Stab (7) durch einen zum letztgenannten Stab im wesentlichen parallel laufenden schmalen Schlitz (9) erzeugt ist, dergestalt, dass die Verbindungen sowohl zwischen Gestellträger (1) und gestellträgerseitigem Stab (6), als auch diejenige zwischen Lastträger (5) und lastträgerseitigem Stab (7) je aus zwei kurzen Biegestäben (25) besteht, wobei die oberen Biegestäbe (25) mit der oberen Blattfeder (3) und die unteren Biegestäbe (25) mit der unteren Blattfeder (4) im wesentlichen fluchten,
- die beiden Blattfedern (3, 4) die beiden Stäbe (6, 7) je nach oben und unten begrenzen,
- die beiden Blattfedern (3, 4) sich horizontal vom einen Stab (6) zum anderen Stab (7) erstrecken.

2. Elastisch untersetzender Kraftmesser nach Patentanspruch 1, dadurch gekennzeichnet, dass
- die vom gestellträgerseitigen Stab (6) ausgehende Messfeder (10) die untere und somit der unteren Blattfeder (4) benachbart ist,
- die vom lastträgerseitigen Stab (7) ausgehende Messfeder (11) die obere und somit der oberen Blattfeder (3) benachbart ist, wodurch der zwischen den Messfedern (10, 11) unter Vorspannung eingebaute Kraftsensor (12) durch eine von oben auf de Kraftaufnehmer (5) aufgebrachte Druckkraft den zusätzlich belastet wird.

3. Elastisch untersetzender Kraftmesser nach Patentanspruch 1, dadurch gekennzeichnet, dass
- die vom gestellträgerseitigen Stab (6) ausgehende Messfeder (11) die obere und somit der oberen Blattfeder (3) benachbart ist,
- die vom kraftaufnehmerseitigen Stab (7) ausgehende Messfeder (10) die untere und somit der unteren Blattfeder (4) benachbart ist, wodurch der zwischen den Messfedern (10, 11) unter Vorspannung eingebaute Kraftsensor (12) durch eine von oben auf den Kraftaufnehmer (5) aufgebrachte Druckkraft teilweise entlastet wird.

4. Elastisch untersetzender Kraftmesser nach Patentanspruch 2 oder 3, dadurch gekennzeichnet, dass
- der Gestellträger (1) sich unterhalb der unteren Blattfeder (4) über diese und den Kraftaufnehmer (5) hinaus erstreckt,
- der Kraftaufnehmer (5) an seinem unteren Ende eine Fortsetzung aufweist, welche durch einen Spalt (18) vom Gestellträger (1) getrennt ist,
- die genannte untere Fortsetzung des Kraftaufnehmers (5) eine seitliche Auskragung aufweist, die von einer Fortsetzung (21) des Gestellträgers (1) umfahren wird, welche Fortsetzung (21) des Gestellträgers (1) von oben her nur durch einen weiteren Spalt (20) von der genannten Auskragung der Fortsetzung des Kraftaufnehmers (5) getrennt ist, wodurch die maximale Bewegungsweite des Kraftaufnehmers (5) in Bezug auf den Gestellträger (1) durch die Summe der Breiten der beiden Spalte (18, 20) definiert ist.

5. Elastisch untersetzender Kraftmesser nach Patentanspruch 2 oder 3, dadurch gekennzeichnet, dass
- sowohl der Gestellträger (1), als auch der Kraftaufnehmer (5) je eine im wesentlichen gleichgestaltete Fortsetzung (26, 27) aufweisen, welche Fortsetzungen (26, 27) aufeinander zu gerichtet sind,
- die eine Fortsetzung (26) an ihrem der anderen Fortsetzung (27) zugewandten Ende gabelförmig zu einer Ausnehmung (23) ausgestaltet ist, welche Ausnehmung (23) das Ende der anderen Fortsetzung (27) mit vertikalem Spiel aufnimmt dergestalt, dass zwischen der Ausnehmung (23) und dem Ende der anderen Fortsetzung (27) ein unterer und ein oberer Spalt (18, 20) vorhanden sind, wodurch die maximale Bewegungsweite des Kraftaufnehmers (5) in Bezug auf den Gestellträger (1) durch die Summe der Breiten der beiden Spalte (18, 20) definiert ist.

6. Elastisch untersetzender Kraftmesser nach Patentanspruch 5, dadurch gekennzeichnet, dass
die Fortsetzungen (26, 27) von Gestellträger (1) und Kraftaufnehmer (5) sich oberhalb des Mess-Systems befinden.

7. Elastisch untersetzender Kraftmesser nach Patentanspruch 5, dadurch gekennzeichnet, dass
die Fortsetzungen (26, 27) von Gestellträger (1) und Lastträger (5) sich unterhalb des Mess-Systems befinden.

8. Elastisch untersetzender Kraftmesser nach Patentanspruch 1, dadurch gekennzeichnet, dass
alle Teile des Kraftmessers mit Ausnahme des Kraftsensors (12) mittels Wasserstrahlschneiden aus einem Stück gefertigt sind.

9. Elastisch untersetzender Kraftmesser nach Patentanspruch 1, dadurch gekennzeichnet, dass
alle Teile des Kraftmessers mit Ausnahme des Kraftsensors (12) mittels Plasmaschneiden aus einem Stück gefertigt sind.

10. Elastisch untersetzender Kraftmesser nach Patentanspruch 1, dadurch gekennzeichnet, dass
alle Teile des Kraftmessers mit Ausnahme des Kraftsensors (12) mittels Laserschneiden aus einem Stück gefertigt sind.

## Claims

1. An elastically graduated force gauge on a framework (13) and a load bridge (14) with two flat springs (3, 4) and two measuring springs (10, 11), weaker in comparison with them and a force sensor (12) positioned between the measuring springs (10, 11), which force gauge is produced from one piece,
- with a frame carrier (1) fastened to the framework (13), a load carrier (5) fastened to the load bridge (14), a frame carrier side rod (6) running essentially parallel to the frame carrier (1), a load carrier side rod (7) running essentially parallel to the load carrier (5), which rods (6, 7) are essentially vertical, the two flat springs (3, 4) essentially horizontal and parallel to each other, and the two measuring springs (10, 11) essentially parallel to them and to each other and a force sensor (12) assembled between the measuring springs (10, 11), whereby
- one flat spring (3) runs above, the other flat spring (4) below,
- all these named parts of the force gauge (1, 3, 4, 5, 6, 7, 10, 11) with the exception of the force sensor (12) are produced from one piece by wire erosion, and this single piece is a flat plate,
- the separation of the frame carrier (1) and the frame carrier side rod (6) is produced by a narrow slit (8) essentially parallel to the named rod (6) and the separation of the load carrier and the load carrier side rod (7) is produced by a narrow slit (9) running essentially parallel to the last named rod, such that the connections both between the frame carrier (1) and the frame carrier side rod (6), and also that between the load carrier (5) and the load carrier side rod (7) each comprise two short flexure rods (25), whereby the upper flexure rod (25) essentially aligns with the upper flat spring (3) and the lower flexure rod (25) with the lower flat spring (4),
- the two flat springs (3, 4) each border the two rods (6, 7) above and below,
- the two flat springs (3, 4) extend horizontally from one rod (6) to the other rod (7).

2. An elastically graduated force gauge according to Patent Claim 1, characterised in that
- the measuring spring (10) extending from the frame carrier side rod (6) is the lower and is thus adjacent to the lower flat spring (4),
- the measuring spring (11) extending from the load carrier side rod (7)is the upper and is thus adjacent to the upper flat spring (3), whereby the force sensor (12) assembled under pre-tension between the measuring springs (10, 11) is additionally loaded by pressure applied from above on the load carrier (5).

3. An elastically graduated force gauge according to Patent Claim 1, characterised in that
- the measuring spring (11) extending from the frame carrier side rod (6) is the lower and is thus adjacent to the lower flat spring (3),
- the measuring spring (10) extending from the load carrier side rod (7) is the lower and is thus adjacent to the lower flat spring (4), whereby the force sensor (12) assembled under pre-tension between the measuring springs (10, 11) is partially released from loading by pressure applied from above on the load carrier (5).

4. An elastically graduated force gauge according to Patent Claim 2 or 3, characterised in that
- the frame carrier (1) extends below the lower flat spring (4) past it, and the load carrier (5)
- the load carrier (5) has a continuation at its lower end, which is separated by a slot (18) from the frame carrier (1),
- the continuation of the load carrier (5) mentioned has a projection, which is surrounded by a continuation (21) of the frame carrier (1), which continuation (21) of the frame carrier (1) is separated from above only by a further slot (20) from the quoted projection of the continuation of the load carrier (5), whereby the maximum range of movement of the load carrier (5) related to the frame carrier (1) is defined by the sum of the widths of the two slots (18, 20).

5. An elastically graduated force gauge according to Patent Claim 2 or 3, characterised in that
- both the frame carrier (1) and also the load carrier (5) each have an essentially similarly formed continuation (26, 27), which continuations (26, 27) are directed towards each other,
- the one continuation (26) is formed as a fork at the end adjacent to the other continuation (27) by a cut out (23), which cut out (23) accepts the end of the other continuation (27) with vertical play such that between the cut out (23) and the end of the other continuation (27) a lower and an upper slot (18, 20) are present, whereby the maximum range of movement of the load carrier (5) in relation to the frame carrier (1) is defined by the sum of the widths of the two slots (18, 20).

6. An elastically graduated force gauge according to Patent Claim 5, characterised in that
the continuations (26, 27) of the frame carrier (1) and the load carrier (5) are situated above the measuring system.

7. An elastically graduated force gauge according to Patent Claim 5, characterised in that
the continuations (26,27) of the frame carrier (1) and the load carrier (5) are situated below the measuring system.

8. An elastically graduated force gauge according to Patent Claim 1, characterised in that
all the parts of the force gauge with the exception of the force sensor (12) are produced from one piece by water jet cutting.

9. An elastically graduated force gauge according to Patent Claim 1, characterised in that
all the parts of the force gauge with the exception of the force sensor (12) are produced from one piece by plasma arc cutting.

10. An elastically graduated force gauge according to Patent Claim 1, characterised in that
all the parts of the force gauge with the exception of the force sensor (12) are produced from one piece by laser cutting.

## Revendications

1. Dynamomètre à réduction élastique sur un bâti (13) et un pont de charge (14), comportant deux ressorts à lames (3, 4), deux ressorts de mesure (10, 11) plus souples que ceux-ci, et un capteur de force (12) monté entre les ressorts de mesure (10, 11), le dynamomètre étant fabriqué d'une seule pièce,
- avec un porte-châssis (1) fixé au châssis (13), un porte-charge (5) fixé au pont de charge (14), une tige (6) située côté porte-châssis (1) et globalement parallèle à celui-ci, une tige (7) située côté porte-charge (5) et globalement parallèle à celui-ci, lesquelles tiges (6, 7) sont globalement verticales, les deux ressorts à lames (3, 4) globalement horizontaux et parallèles, les deux ressorts de mesure (10, 11) globalement parallèles à ceux-ci et parallèles entre eux, et un capteur de force (12) monté entre les ressorts de mesure (10, 11), étant précisé que
- le premier ressort à lame (3) est en haut tandis que le second ressort à lame (4) est en bas,
- tous ces éléments du dynamomètre (1, 3, 4, 5, 6, 7, 10, 11) à l'exception du capteur de force (12) sont fabriqués d'une seule pièce par érosion par fil et cette pièce unique est une plaque plane,
- la séparation entre le porte-châssis (1) et la tige (6) située côté porte-châssis est réalisée par une étroite fente (8) globalement parallèle à la tige (6) tandis que la séparation entre le porte-charge et la tige (7) située côté porte-charge est réalisée par une étroite fente (9) globalement parallèle à la tige citée en dernier, de telle sorte que la liaison entre le porte-châssis (1) et la tige (6) située côté porte-châssis et la liaison entre le porte-charge (5) et la tige (7) située côté porte-charge se composent chacune de deux courtes tiges de flexion (25), les tiges de flexion (25) supérieures étant globalement dans l'alignement du ressort à lame supérieur (3) tandis que les tiges de flexion (25) inférieures sont globalement dans l'alignement du ressort à lame inférieur (4),
- les deux ressorts à lames (3, 4) limitent les deux tiges (6, 7) vers le haut et vers le bas,
- les deux ressorts à lames (3, 4) s'étendent horizontalement d'une tige (6) à l'autre (7).

2. Dynamomètre à réduction élastique selon la revendication 1, caractérisé en ce que
- le ressort de mesure (10) qui part de la tige (6) située côté porte-châssis forme le ressort de mesure inférieur et est donc voisin du ressort à lame inférieur (4),
- le ressort de mesure (11) qui part de la tige (7) située côté porte-charge forme le ressort de mesure supérieur et est donc voisin du ressort à lame supérieur (3), moyennant quoi le capteur de force (12) monté avec une précontrainte entre les ressorts de mesure (10, 11) est soumis à une contrainte supplémentaire par une force de compression exercée par le haut sur le transducteur de force (5).

3. Dynamomètre à réduction élastique selon la revendication 1, caractérisé
- en ce que le ressort de mesure (11) qui part de la tige (6) située côté porte-châssis forme le ressort de mesure supérieur et est donc voisin du ressort à lame supérieur (3),
- en ce que le ressort de mesure (10) qui part de la tige (7) située côté transducteur de force forme le ressort de mesure inférieur et est donc voisin du ressort à lame inférieur (4), moyennant quoi le capteur de force (12) monté avec une précontrainte entre les ressorts de mesure (10, 11) est partiellement déchargé par une force de compression exercée par le haut sur le transducteur de force (5).

4. Dynamomètre à réduction élastique selon la revendication 2 ou 3, caractérisé en ce que
- le porte-châssis (1) s'étend, au-dessous du ressort à lame inférieur (4), au-delà de celui-ci et du transducteur de force (5),
- le transducteur de force (5) comporte à son extrémité inférieure un prolongement qui est séparé du porte-châssis (1) par un interstice (18),
- ledit prolongement inférieur du transducteur de force (5) comporte une saillie latérale qui est entourée par un prolongement (21) du porte-châssis (1), lequel prolongement (21) du porte-châssis (1) n'est séparé de la saillie du prolongement du transducteur de force (5) que par un second interstice (20), par le haut, la largeur de déplacement maximale du transducteur (5) par rapport au porte-châssis (1) étant définie par la somme des largeurs des deux interstices (18, 20).

5. Dynamomètre à réduction élastique selon la revendication 2 ou 3, caractérisé en ce que
- le porte-châssis (1) et le transducteur de force (5) comportent tous les deux des prolongements respectifs (26, 27) de forme globalement identique qui sont dirigés l'un vers l'autre,
- le premier prolongement (26), à son extrémité tournée vers le second prolongement (27), a une forme fourchue qui définit un creux (23), lequel creux (23) reçoit l'extrémité du second prolongement (27) avec un jeu vertical, de sorte que des interstices inférieur et supérieur (18, 20) sont définis entre le creux (23) et l'extrémité du second prolongement (27), moyennant quoi la largeur de mouvement maximale du transducteur de force (5) par rapport au porte-châssis (1) est définie par la somme des largeurs des deux interstices (18, 20).

6. Dynamomètre à réduction élastique selon la revendication 5, caractérisé en ce que les prolongements (26, 27) du porte-châssis (1) et du transducteur de force (5) se trouvent au-dessus du système de mesure.

7. Dynamomètre à réduction élastique selon la revendication 5, caractérisé en ce que les prolongements (26, 27) du porte-châssis (1) et du porte-charge (5) se trouvent au-dessous du système de mesure.

8. Dynamomètre à réduction élastique selon la revendication 1, caractérisé en ce que tous les éléments du dynamomètre, à l'exception du capteur de force (12), sont fabriqués d'une seule pièce par découpage au jet d'eau.

9. Dynamomètre à réduction élastique selon la revendication 1, caractérisé en ce que tous les éléments du dynamomètre, à l'exception du capteur de force (12), sont fabriqués d'une seule pièce par découpage au jet de plasma.

10. Dynamomètre à réduction élastique selon la revendication 1, caractérisé en ce que tous les éléments du dynamomètre, à l'exception du capteur de force (12), sont fabriqués d'une seule pièce par découpage au laser.
